# EUROPÄISCHE PATENTSCHRIFT

(11) **EP 3 601 836 B1**
(45) Veröffentlichungstag und Bekanntmachung des Hinweises auf die Patenterteilung: **21.07.2021**
(21) Anmeldenummer: 18712525.7
(22) Anmeldetag: 12.03.2018
(51) Int. Cl.: F16D 66/00

(54) **POLRAD AN EINEM RAD EINES FAHRZEUGS**
POLE WHEEL ON A VEHICLE WHEEL
ROUE POLAIRE SUR UNE ROUE DE VÉHICULE

(30) Priorität: 24.03.2017 DE 102017002869
(43) Veröffentlichungstag der Anmeldung: 05.02.2020
(73) Patentinhaber: ZF CV Systems Hannover GmbH, 30453 Hannover (DE)
(72) Erfinder: WOLF, Thomas, 30890 Barsinghausen (DE); DALISDAS, Jürgen, 30627 Hannover (DE)
(74) Vertreter: Rabe, Dirk-Heinrich
(86) Internationale Anmeldenummer: PCT/EP2018/056049
(87) Internationale Veröffentlichungsnummer: WO 2018/172116

(56) Entgegenhaltungen:
- EP-A2- 1 088 751
- WO-A1-2006/008044
- DE-A1- 3 802 508
- DE-B3-102008 017 360

## Beschreibung

Die Erfindung betrifft ein elektronisches Überwachungssystem für eine Winkellage und/oder eine Drehgeschwindigkeit eines Rades im Betrieb eines Fahrzeugs, umfassend einen Drehgeschwindigkeitssensor und ein axial dem Drehgeschwindigkeitssensor gegenüber angeordnetes Polrad, welches an einer Bremsscheibe einer Fahrzeugradbremse anbaubar ist, und welches über seinem Umfang gleichmäßig verteilte, durch radiale Stege voneinander beabstandete Durchbrüche aufweist.
Aus der EP 1 088 751 A2 und WO 2006/008044 A1 sind allgemein Polräder bekannt. Die WO 2006/008044 A1 zeigt hierbei Sicken oder Rippen, welche der Versteifung dienen aber keinen Bezug zu einem Sensor aufweisen. Die EP 1 088 751 A2 zeigt unter anderem einen Sensor, welcher unter einem definierten Abstand zu einem Polrad angeordnet wird.
Ein derartiges Polrad ist aus der EP 1 293 699 A2 bekannt. Das Polrad ist mit einer Bremsscheibe eines Fahrzeugrades verbindbar. Es weist Stege auf, welche Durchbrüche in dem Polrad voneinander beabstanden. Die Stege und/oder Durchbrüche des Polrades dienen als Impulsgeber für einen Näherungssensor, dessen Sensorsignale an ein Steuergerät beispielsweise eines Anti-Blockier-Systems weitergeleitet werden. Aus den Sensorinformationen kann die Winkellage und/oder die Drehzahl der Bremsscheibe und damit des Fahrzeugrades ermittelt werden. Die in dieser Druckschrift beschriebene besondere Ausgestaltung von Polrad und Bremsscheibe soll eine vorteilhafte Befestigung des Polrades an der Bremsscheibe ermöglichen und die Gefahr einer Rostunterwanderung vermeiden.
Demgegenüber liegt der Erfindung die Aufgabe zugrunde, ein dem gleichen Anwendungszweck dienendes Polrad so zu gestalten, dass ein notwendiger Luftspalt zwischen einer dem Sensor zugewandten Oberfläche des Polrades und einer dem Polrad zugewandten stirnseitigen Endfläche des Sensors ein vorgegebenes Maß einhält, auch wenn es zu Rostunterwanderung und unterschiedlichen Materialausdehnungen im Betrieb kommt.

Gelöst wird diese Aufgabe mit einem Polrad, welches die Merkmale des Anspruch 1 aufweist. Vorteilhafte Weiterbildungen sind in den abhängigen Ansprüchen definiert.

Demnach geht die Erfindung aus von einem elektronischen Überwachungssystem für eine Winkellage und/oder eine Drehgeschwindigkeit eines Rades im Betrieb eines Fahrzeugs, umfassend einen Drehgeschwindigkeitssensor und ein axial dem Drehgeschwindigkeitssensor gegenüber angeordnetes Polrad, welches an einer Bremsscheibe einer Fahrzeugradbremse anbaubar ist, und welches über seinem Umfang gleichmäßig verteilte, durch radiale Stege voneinander beabstandete Durchbrüche aufweist. Zur Lösung der gestellten Autgabe ist bei diesem Polrad vorgesehen, dass das Polrad radial oberhalb seiner Durchbrüche und Stege eine axial vorstehende Ausbuchtung aufweist.

Hierbei ist vorgesehen, dass an die axial vorstehende Ausbuchtung eine stirnseitige Endfläche des Drehgeschwindigkeitssensors angelegt ist, und dass sich die Ausbuchtung nur derart geringfügig axial erstreckt, dass durch diese axial zwischen den Durchbrüchen und Stegen einerseits sowie der stirnseitigen Endfläche des Drehgeschwindigkeitssensors andererseits ein Luftspalt definierter Breite ausgebildet ist. Durch den geschilderten Aufbau kann an die Ausbuchtung des Polrades ein Drehgeschwindigkeitssensor axial angelegt werden, wobei die axiale Erstreckung der Ausbuchtung die Einhaltung eines Luftspalts zwischen dem Drehgeschwindigkeitssensor und den Durchbrüchen sowie Stegen des Polrades mit einer vorgegebenen axialen Breite gewährleistet. Dieser Luftspalt zwischen dem Polrad und dem Drehgeschwindigkeitssensor ändert sich auch nicht, wenn sich das Polrad wegen Rostunterwanderung in dessen Befestigungsbereich oder aufgrund unterschiedlicher Materialausdehnungen verlagert. Die Kontaktfläche, mit welcher der Drehgeschwindigkeitssensor an der Ausbuchtung anliegt ist sehr gering, so dass die dortigen Reibungsverluste vernachlässigbar sind.
In diesem Zusammenhang ist vorgesehen, dass die Stege und/oder die Durchbrüche in Umfangsrichtung des Polrades aufeinander folgende Impulsgeber für einen ortsfest sowie axial gegenüber dem Polrad anzuordnenden Drehgeschwindigkeitssensor sind. Soweit hier von einem Drehgeschwindigkeitssensor gesprochen wird sei angemerkt, dass es sich genau genommen um einen Näherungssensor handelt, bei dem bei sich drehendem Polrad ein vorbeibewegter Steg einen elektromagnetisch verursachten Impuls erzeugt, der dann an ein mit dem Sensor verbundenes Steuerungsgerät weiterleitet wird. Aus den pro Zeiteinheit abgegebenen Impulsen des Näherungssensors errechnet das Steuerungsgerät dann beispielsweise die aktuelle Drehwinkellage oder die aktuelle Drehzahl des Polrades beziehungsweise des mit dem Polrad drehfest verbundenen Bauteils, etwa der schon erwähnten Bremsscheibe eines Kraftfahrzeugs. Gemäß einer bevorzugten Ausführungsform ist vorgesehen, dass die radial ausgerichteten Stege des Polrades mit einem radial äußeren Axialflansch und mit einem radial inneren Axialflansch einstückig verbunden sind, und dass der radial äußere Axialflansch und/oder der radial innere Axialflansch mit einem radial abgebogenen Radialflansch einstückig verbunden sind, der dazu bestimmt ist, an einer radialen Anlagefläche der Bremsscheibe befestigt zu werden.

Zur Befestigung der Polscheibe an einer solchen Bremsscheibe kann vorgesehen sein, dass die radiale Anlagefläche in der Bremsscheibe axial vertieft angeordnet ist, und dass benachbart zu der Anlagefläche eine nach radial innen offene, kreisförmige Nut in der Bremsscheibe zur Aufnahme eines das Polrad an der Bremsscheibe sichernden Sprengrings ausgebildet ist.

Besonders einfach herstellbar und vorteilhaft ist es, wenn die axial vorstehende Ausbuchtung am Übergang von dem radial äußeren Axialflansch zu den Stegen als angeformter, umlaufender Vorsprung ausgebildet ist, und die axiale Erstreckung dieser Ausbuchtung der erforderlichen Weite des Luftspalts zwischen den dem Drehgeschwindigkeitssensor zugewandten Oberflächen, der Stege und der stirnseitigen Endfläche des Drehgeschwindigkeitssensors entspricht.

Um eine geringfügige axiale Beweglichkeit des Polrades auch bei Rostunterwanderung oder infolge unterschiedlicher Materialausdehnungen wirkungslos zu halten, kann vorgesehen sein, dass der Drehgeschwindigkeitssensor elastisch an der als umlaufender Vorsprung ausgebildeten Ausbuchtung anliegt.

Das Polrad lässt sich auf einfache Weise als Blechumformteil mit ausgestanzten oder auf andere geeignete Weise eingebrachten Durchbrüchen herstellen.

Das beschriebene Polrad, dessen Anordnung sowie dessen Zusammenwirken mit einem Drehzahlsensor sind vorteilhafte Elemente eines elektronisches Überwachungssystems für die Winkellage und/oder die Drehgeschwindigkeit eines Rades im Betrieb eines Fahrzeugs, insbesondere bei einem Anti-Blockier-System.

Die Erfindung wird nachstehend anhand eines in der beigefügten Zeichnung dargestellten Ausführungsbeispiels näher erläutert. In der Zeichnung zeigt
Fig. 1 eine Teilschnittansicht einer Bremsscheibe mit daran angeordnetem Polrad, und
Fig. 2 eine vergrößerte Teilschnittansicht eines Polrades mit einem daran angeordnetem Drehgeschwindigkeitssensor.

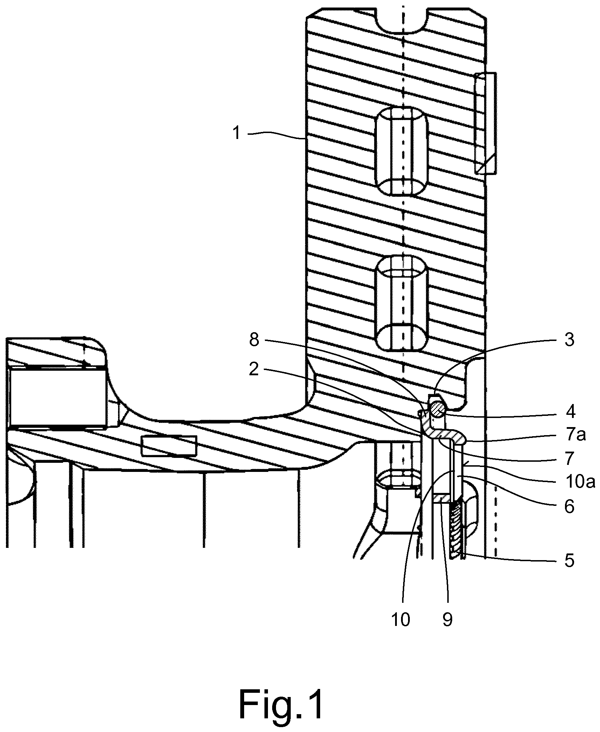

Fig. 1 zeigt demnach schematisch in einem Teillängsschnitt eine Bremsscheibe 1 eines Fahrzeugs, beispielsweise eines Personenkraftfahrzeugs, eines Nutzfahrzeugs oder eines Anhängefahrzeugs. Diese Bremsscheibe 1 weist radial innen im Bereich ihrer in

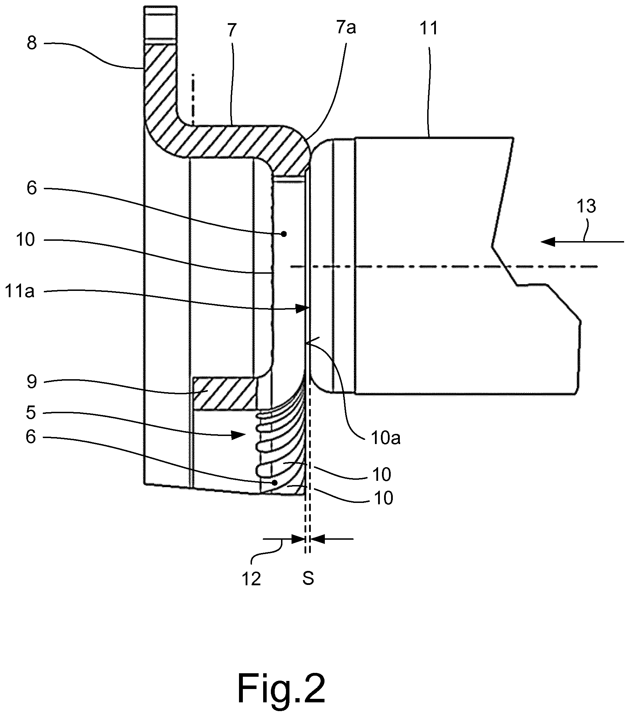

Fig. 1 rechten Stirnseite eine kreisringförmige und axial einseitig offene Vertiefung auf, an der eine Anlagefläche 2 für ein Polrad 5 ausgebildet ist. Das dort angeordnete Polrad 5 besteht aus einem Blechumformteil mit ausgestanzten Durchbrüchen 6 in Form von Radialschlitzen, die durch Radialstege 10 voneinander beabstandet sind. Diese Radialstege 10 und/oder die Durchbrüche 6 dienen als Impulsgeber für einen in Fig. 2 dargestellten Drehgeschwindigkeitssensor 11.

Wie insbesondere die vergrößerte Darstellung gemäß Fig. 2 verdeutlicht, weist das Polrad 5 einen radial äußeren Axialflansch 7, einen daran einstückig ausgebildeten, abgebogenen äußeren Radialflansch 8 sowie einen radial inneren Axialflansch 9 auf. Mit dem radial äußeren Axialflansch 7 und dem radial inneren Axialflansch 9 sind die Radialstege 10 einstückig verbunden, welche jeweils zwei benachbarte Durchbrüche 6, die als ausgestanzte Radialschlitze ausgebildet sind, zueinander beabstanden.

Am Übergang des radial äußeren Axialflansches 7 zu den Durchbrüchen 6 und den Radialstegen 10 ist eine kreisringförmige Ausbuchtung 7a ausgebildet, welche sich nur sehr geringfügig axial in Richtung zu dem Drehgeschwindigkeitssensor 11 erstreckt. Diese axiale Ausbuchtung 7a kann gemäß einer anderen Ausführungsform auch durch eine Mehrzahl von nur im Bereich der radial äußeren Enden der Radialstege 10 ausgebildeten Kreissegmenten bestehen.

Der Drehgeschwindigkeitssensor 11 ist axial beweglich in einer dazu geeigneten Halterung aufgenommen und wird mittels einer durch einen Pfeil 13 symbolisierten Federkraft elastisch an die axiale Ausbuchtung 7a des Polrades 5 gepresst. Wegen des axial geringfügigen Hinausragens der Ausbuchtung 7a über die durch die Oberflächen 10a der Radialstege 10 gebildete sensorseitige Stirnseite des Polrades 5 ist zwischen den Oberflächen 10a der Radialstege 10 und einer stirnseitigen Endfläche 11a des Drehgeschwindigkeitssensors 11 ein Luftspalt 12 gebildet, dessen axiale Breite S der axialen Breite der Ausbuchtung 7a entspricht und sich bei der Fertigung des Polrades 5 präzise einstellen lässt.

Aus Fig. 1 ist ersichtlich, dass sich das Polrad 5 mittels seines äußeren Radialflansches 8 an der Bremsscheibe 1 befestigen lässt, indem in eine benachbart zu der Anlagefläche 2 ausgebildete, nach radial innen offene Nut 3 in der Bremsscheibe 1 ein Sprengring 4 nach dem Einführen des Polrades 5 an die Anlagefläche 2 der Bremsscheibe 1 eingesetzt wird. Andere Befestigungsarten des Polrades 5 an der Bremsscheibe 1 sind selbstverständlich ebenfalls möglich, beispielsweise mittels eines in die Nut 3 eingesetzten Wellrings oder mittels Schrauben, Nieten oder dergleichen. Da sich Blechumformteile hochpräzise ohne zusätzliche Bearbeitung herstellen lassen, ist ein vorgebbarer Luftspalt 12 auch bei einer Großserienfertigung mit der notwendigen Genauigkeit ausbildbar.

## Patentansprüche

1. Elektronisches Überwachungssystem für eine Winkellage und/oder eine Drehgeschwindigkeit eines Rades im Betrieb eines Fahrzeugs, umfassend einen Drehgeschwindigkeitssensor (11) und ein axial dem Drehgeschwindigkeitssensor (11) gegenüber angeordnetes Polrad (5), welches an einer Bremsscheibe (1) einer Fahrzeugradbremse anbaubar ist, und welches über seinem Umfang gleichmäßig verteilte, durch radiale Stege (10) voneinander beabstandete Durchbrüche (6) aufweist, wobei das Polrad (5) radial außerhalb seiner Durchbrüche (6) und Stege (10) eine axial vorstehende Ausbuchtung (7a) aufweist, **dadurch gekennzeichnet, dass** an die axial vorstehende Ausbuchtung (7a) eine stirnseitige Endfläche (11a) des Drehgeschwindigkeitssensors (11) angelegt ist, und dass sich die Ausbuchtung (7a) nur derart geringfügig axial erstreckt, dass durch diese axial zwischen den Durchbrüchen (6) und Stegen (10) einerseits sowie der stirnseitigen Endfläche (11a) des Drehgeschwindigkeitssensors (11) andererseits ein Luftspalt (12) definierter Breite (S) ausgebildet ist..

2. Überwachungssystem nach Anspruch 1, **dadurch gekennzeichnet, dass** die Stege (10) und/oder die Durchbrüche (6) in Umfangsrichtung des Polrades (5) aufeinander folgende Impulsgeber für den ortsfest angeordneten Drehgeschwindigkeitssensor (11) sind.

3. Überwachungssystem nach einem der Ansprüche 1 bis 2, **dadurch gekennzeichnet, dass** die radial ausgerichteten Stege (10) des Polrades (5) mit einem radial äußeren Axialflansch (7) und mit einem radial inneren Axialflansch (9) einstückig verbunden sind, wobei der radial äußere Axialflansch (7) und/oder der radial innere Axialflansch (9) mit einem radial abgebogenen Radialflansch (8) einstückig verbunden sind, der dazu bestimmt ist, an einer radialen Anlagefläche (2) der Bremsscheibe (1) befestigt zu werden.

4. Überwachungssystem nach Anspruch 3, **dadurch gekennzeichnet, dass** die radiale Anlagefläche (2) in der Bremsscheibe (1) axial vertieft angeordnet ist, und dass benachbart zu der Anlagefläche (2) eine nach radial innen offene, kreisförmige Nut (3) in der Bremsscheibe (1) zur Aufnahme eines das Polrad (5) an der Bremsscheibe (1) sichernden Sprengrings (4) ausgebildet ist.

5. Überwachungssystem nach einem der Ansprüche 1 bis 4, **dadurch gekennzeichnet, dass** die axial vorstehende Ausbuchtung (7a) am Übergang von dem radial äußeren Axialflansch (7) zu den Stegen (10) als angeformter, umlaufender Vorsprung ausgebildet ist, und dass die axiale Erstreckung dieser Ausbuchtung (7a) der erforderlichen Weite des Luftspalts (12) zwischen den dem Drehgeschwindigkeitssensor (11) zugewandten Oberflächen (10a) der Stege (10) und der stirnseitigen Endfläche (11a) des Drehgeschwindigkeitssensors (11) entspricht.

6. Überwachungssystem nach einem der Ansprüche 1 bis 5, **dadurch gekennzeichnet, dass** der Drehgeschwindigkeitssensor (11) elastisch an der Ausbuchtung (7a) anliegt.

7. Überwachungssystem nach einem der Ansprüche 1 bis 6, **dadurch gekennzeichnet, dass** das Polrad (5) als Blechumformteil mit ausgestanzten Durchbrüchen (6) hergestellt ist.

## Claims

1. An electronic monitoring system for an angular position and/or a rotational speed of a wheel in the operation of a vehicle, comprising a rotational speed sensor (11) and a pole wheel (5) arranged axially across from the rotational speed sensor (11), said pole wheel which can be mounted on a brake disk (1) of a vehicle wheel brake, and which has through-holes (6) distributed uniformly over its circumference, spaced apart by radial fins (10), wherein the pole wheel (5) has a bulge (7a) axially protruding outside of its through-holes (6) and fins (10), **characterized in that** a front end face (11a) of the rotational speed sensor (11) is placed on the axially protruding bulge (7a), and **in that** the bulge (7a) extends only slightly, such that an air gap (12) of defined width (S) is axially formed between the through-holes (6) and fins (10) on the one side and the front end face (11a) of the rotational speed sensor (11) on the other side.

2. The monitoring system according to claim 1, **characterized in that** the fins (10) and/or the through-holes (6) are pulse generators which follow one another in the circumferential direction of the pole wheel (5) for the stationarily arranged rotational speed sensor (11).

3. The monitoring system according to any of claims 1 to 2, **characterized in that** the radially oriented fins (10) of the pole wheel (5) are connected in one piece to a radially outer axial flange (7) and to a radially inner axial flange (9), wherein the radially outer axial flange (7) and/or the radially inner axial flange (9) are connected in one piece to a radially bent radial flange (8), for the purpose of being to be fastened to a radial bearing surface (2) of the brake disk (1).

4. The monitoring system according to claim 3, **characterized in that** the radial bearing surface (2) is arranged in an axially recessed manner in the brake disk (1), and **in that**, adjacent to the bearing surface (2), a radially inwardly open circular groove (3) is formed in the brake disk (1) for receiving a snap ring (4) securing the pole wheel (5) to the brake disk (1).

5. The monitoring system according to any of claims 1 to 4, **characterized in that** the axially protruding bulge (7a) is formed on the transition from the radially outward axial flange (7) to the fins (10) as an integrally molded, circumferential projection, and **in that** the axial extent of this bulge (7a) corresponds to the required width of the air gap (12) between the surfaces (10a) of the fins (10) facing the rotational speed sensor (11) and the front end face (11a) of the rotational speed sensor (11).

6. The monitoring system according to any of claims 1 to 5, **characterized in that** the rotational speed sensor (11) abuts elastically on the bulge (7a).

7. The monitoring system according to any of claims 1 to 6, **characterized in that** the pole wheel (5) is manufactured as a formed sheet-metal part with punched-out through-holes (6).

## Revendications

1. Système de surveillance électronique pour une position angulaire et/ou une vitesse de rotation d'une roue lors du fonctionnement d'un véhicule, comprenant un capteur de vitesse de rotation (11) et une roue polaire (5) disposée de manière opposée axialement au capteur de vitesse de rotation (11), laquelle peut être ajoutée à un disque de frein (1) d'un frein de roue de véhicule, et laquelle présente des passages (6) espacés les uns des autres par des éléments jointifs (10) radiaux, répartis uniformément sur leur périphérie, dans lequel la roue polaire (5) présente radialement à l'extérieur de ses passages (6) et éléments jointifs (10) un renflement (7a) faisant saillie axialement, **caractérisé en ce qu'**une surface d'extrémité frontale (11a) du capteur de vitesse de rotation (11) est placée sur le renflement (7a) faisant saillie axialement, et que le renflement (7a) ne s'étend que légèrement axialement, de telle sorte qu'un entrefer (12) d'une largeur (S) définie est réalisé à travers celui-ci axialement entre les passages (6) et éléments jointifs (10) d'une part ainsi que la surface d'extrémité côté frontal (11a) du capteur de vitesse de rotation (11) d'autre part.

2. Système de surveillance selon la revendication 1, **caractérisé en ce que** les éléments jointifs (10) et/ou les passages (6) sont des générateurs d'impulsions se succédant dans la direction périphérique de la roue polaire (5) pour le capteur de vitesse de rotation (11) disposé de manière fixe.

3. Système de surveillance selon l'une quelconque des revendications 1 à 2, **caractérisé en ce que** les éléments jointifs (10) orientés radialement de la roue polaire (5) sont reliés d'une seule pièce à une bride axiale radialement extérieure (7) et à une bride axiale radialement intérieure (9), dans lequel la bride axiale radialement extérieure (7) et/ou la bride axiale radialement intérieure (9) sont reliées d'une seule pièce à une bride radiale (8) pliée radialement, qui est destinée à être fixée sur une surface d'appui (2) radiale du disque de frein (1).

4. Système de surveillance selon la revendication 3, **caractérisé en ce que** la surface d'appui (2) radiale est disposée de manière renfoncée axialement dans le disque de frein (1), et qu'au voisinage de la surface d'appui (2), une rainure (3) circulaire ouverte radialement vers l'intérieur est réalisée dans le disque de frein (1) pour la réception d'une bague de retenue (4) bloquant la roue polaire (5) sur le disque de frein (1).

5. Système de surveillance selon l'une quelconque des revendications 1 à 4, **caractérisé en ce que** le renflement (7a) faisant saillie axialement est réalisé sous la forme d'une partie saillante périphérique formée à la transition de la bride axiale radialement extérieure (7) aux éléments jointifs (10), et que l'étendue axiale de ce renflement (7a) correspond à l'ampleur nécessaire de l'entrefer (12) entre les surfaces (10a) des éléments jointifs (10) tournées vers le capteur de vitesse de rotation (11) et la surface d'extrémité côté frontal (11a) du capteur de vitesse de rotation (11).

6. Système de surveillance selon l'une quelconque des revendications 1 à 5, **caractérisé en ce que** le capteur de vitesse de rotation (11) s'applique de manière élastique contre le renflement (7a).

7. Système de surveillance selon l'une quelconque des revendications 1 à 6, **caractérisé en ce que** la roue polaire (5) est fabriquée en tant que pièce en tôle formée à la presse avec des passages (6) poinçonnés.
